(19) **Europäisches Patentamt / European Patent Office / Office européen des brevets**

(11) **EP 4 721 699 A1**

(12) **EUROPEAN PATENT APPLICATION**
published in accordance with Art. 153(4) EPC

(43) Date of publication:
08.04.2026 Bulletin 2026/15

(21) Application number: 24815763.8

(22) Date of filing: 21.05.2024

(51) International Patent Classification (IPC):
A61C 13/00 (2006.01)     A61C 13/083 (2006.01)
A61C 13/087 (2006.01)     A61C 13/09 (2006.01)

(52) Cooperative Patent Classification (CPC):
A61C 13/00; A61C 13/083; A61C 13/087;
A61C 13/09

(86) International application number:
PCT/KR2024/006835

(87) International publication number:
WO 2024/248386 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.05.2023 KR 20230068492
26.05.2023 KR 20230068493

(71) Applicant: Hass Co., Ltd.
Gangwon-do 25452 (KR)

(72) Inventors:
• KIM, Sung Min
Yongin-si Gyeonggi-do 16903 (KR)
• KOH, Hwan Soon
Anyang-si Gyeonggi-do 13910 (KR)
• KIM, Moon Chang
Gangneung-si Gangwon-do 25583 (KR)
• CHO, Heon Jin
Gangneung-si Gangwon-do 25425 (KR)

(74) Representative: Gulde & Partner
Patent- und Rechtsanwaltskanzlei mbB
Berliner Freiheit 2
10785 Berlin (DE)

(54) **COMPOSITE BULK BLOCK FOR MANUFACTURING PROSTHESIS, MANUFACTURING METHOD THEREFOR, AND PROSTHESIS MANUFACTURED THEREFROM**

(57) Disclosed in the present invention is a composite bulk block for manufacturing a dental prosthesis, in which a glass ceramic matrix is composed of an amorphous glass matrix and a crystaliine phase dipersed in the glass matrix, the crystaliine phase including, as the main crystaliine phase, at least one selected from a lucite crystaliine and lithium disilicate crystaliine phase, and polymer is included in an amount of 20-40 wt% with respect to the weigth of the entire bulk block, and the composite bulk block has a gradient of a light transmittance along the depth direction and has an interface at change point of the light transmittance gradient value. Thus, the composite bulk block for manufacturing a dental prosthesis is provided which enables quick and easy processing of an aesthetic and functoinal restoration while simulating a natural teeth.

# EP 4 721 699 A1

**Description**

[Technical Field]

The present disclosure relates to a composite bulk block for manufacturing a dental prosthesis that can be processed quickly and easily into an esthetic and functional restoration that simulates a natural tooth, a manufacturing method therefor, and a prosthesis manufactured therefrom.

[Background Art]

In the case of prosthetic materials that have been used in the related art, such as porcelain or metal, as the dental industry has developed, issues such as properties or dental esthetics have emerged, so their market share has been gradually decreasing in terms of material. In order to replace them, the market share of materials such as crystallized glass and zirconia has been increasing. Further, in the case of hot-press molding that is a prosthesis manufacturing method that has been used in the related art, there is a problem that the manufacturing time of prostheses is long, so it is difficult to manufacture one-day prostheses currently promoted in the dental market, and thus a transition to CAD/CAM systems occurs. In order to support this transition, the usefulness of a 1:1 machinable material that can be immediately placed after processing without additional heat treatment of crystallized glass has been emphasized in terms of material.

Of course, many materials exhibiting excellent esthetics and high properties are being used due to advances in zirconia and crystallized glass, but, most ceramic materials undergo a crystallization heat-treatment process after machining, so it is difficult to use them as a one-day prosthesis.

Further, in the case of ceramic materials that are currently machined on a 1:1 basis, there is a problem that the machinability is low and chipping occurs in a margin portion (the boundary portion between a prosthesis and a tooth) due to the use of ceramic materials that have already undergone crystallization.

A composite containing both organic and inorganic substances has been developed to solve these problems and meet the current demands of the dental market. A composite is a complementary material in which an organic component suppresses brittleness, which is one of the disadvantages of an inorganic component, and an inorganic component enhances the properties, such as low strength, of an organic component. Further, since a composite has the advantage that it can be subjected to 1:1 machining that enables immediate intraoral placement after processing, technology continues to be developed and new products are being launched. Composites have strength of approximately 150 to 200 MPa, depending on currently commercialized products, and also have the advantage that their machinability is superior to that of existing glass ceramics that can be machined on a 1:1 basis.

In relation to such composites, the inventors, in Korean Patent No. 10-1682542, have disclosed a method of manufacturing a dental block, including: a step of preparing a glass ceramic; a step of forming a ceramic porous body by rendering the glass ceramic porous; a first infiltration step of primarily infiltrating a polymer into the ceramic porous body in a vacuum state by loading the ceramic porous body into a vacuum chamber; and a second infiltration step of secondarily infiltrating a polymer into the ceramic porous body before the primarily infiltrated polymer is completely cured, and characterized by achieving a biaxial flexural strength of 100 to 150 MPa.

The glass ceramic herein is a feldspar-based glass ceramic, specifically containing $N_2O$ 2.0~6.0 percent by weight, $SiO_2$ 60.0~65.0 percent by weight, $K_2O$ 8.0~15.0 percent by weight, CaO 0.5~3.0 percent by weight, BaO 0.5~2.0 percent by weight, $CeO_2$ 0.2~1.0 percent by weight, $TiO_2$ 0~0.5 percent by weight, $Al_2O_3$ 16.0~19.0 percent by weight for increasing a glass transition temperature and a softening point and enhancing the chemical durability of the crystallized glass, and coloring components 0~1.0 percent by weight that affect coloring, including brightness and chroma, and exhibit fluorescence.

Further, Korean Patent No. 10-1609291 discloses a method of manufacturing a dental block, which includes: a step of crushing glass and then melting the glass at a temperature of 1,400 to 1,800°C; a step of cooling and then crushing the molten glass, and performing a crystallization heat treatment on the crushed glass at 875 to 970°C; a step of re-crushing the crystallized glass subjected to the crystallization heat treatment, and then performing a porous heat treatment on the crystallized glass at a temperature of 700 to 840°C; and a step of infiltrating a polymer into the porous body formed in the crystallized glass subjected to the porous heat treatment, wherein the glass molten at a temperature of 1,400 to 1,800°C contains $N_2O$ 2.0~6.0 percent by weight, $SiO_2$ 60~65.0 percent by weight, $K_2O$ 8.0~15 percent by weight, CaO 0.5~3.0 percent by weight, BaO 0.5~2.0 percent by weight, $CeO_2$ 0.2~1.0 percent by weight, $TiO_2$ over 0 to 0.5 percent by weight, and $Al_2O_3$ 16.0~19.0 percent by weight.

In detail, the glass herein is also a feldspar-based glass, and the resulting block is disclosed to exhibit a biaxial flexural strength of about 100 to 150 MPa.

On the other hand, Korean Registration No. 10-2122202 proposes a method of manufacturing a composite using chemical bonding between inorganic and organic materials via a silane coupling agent. Specifically, the method includes: a step of adding a thermal initiator to a first mixture obtained by mixing at least two organic materials having different viscosities at 20 to 70°C; a step of surface-treating the inorganic material using a second mixture in which 10 to 14 percent by weight of an acrylic silane coupling agent is mixed in ethanol; a step of mixing the inorganic material surface-treated by the second mixture with the first mixture containing the thermal initiator; and a step of curing the resulting mixture through thermal polymerization at 100 to 150°C.

Further, Korean Patent No. 10-2228118 proposes a dental composite composition including crystallized glass and a curable organic material, in which the crystallized glass has an average crystal size of 50 to 400 nm and from which a dental composite having a biaxial flexural strength of 200 to 300 MPa and a Vickers hardness of 270 to 300 Hv can be provided.

As another example, U.S. Patent No. 7,807,227 discloses a composite material including a porous inorganic-nonmetallic matrix and a second material, and a method for manufacturing the composite material. The method for manufacturing a composite material includes: obtaining a porous inorganic-nonmetallic matrix sintered body by sintering an inorganic-nonmetallic starting material; obtaining a surface-modified product by coating a coupling agent on the surface of the porous inorganic-nonmetallic matrix; infiltrating an organic material into the surface-modified porous inorganic-nonmetallic matrix; and coagulating the organic material, in order to obtain an isotropic composite material, in which the isotropic composite material includes a porous inorganic-nonmetallic matrix having a bending strength of 40 MPa ore more measured in accordance with ISO 6872 and an organic material at least partially filling the pores of the porous inorganic-nonmetallic matrix, and the isotropic composite material has a modulus of elasticity of 25 GPa or more measured in accordance with ISO 10477 and a bending strength of 100 MPa or more measured in accordance with ISO 6872.

Japanese Patent Registration No. 4636514 discloses a dental material that can maintain mechanical strength such as wear resistance and bending strength, color stability, stain resistance, and esthetics over a long period, that is excellent in terms of modulus of bending elasticity and impact strength, and that is also suitable for machining using a low-cost CAD/CAM system, and a method of manufacturing the dental material. The method is a method of manufacturing a dental material by infiltrating a porous ceramics with resin, and includes: (a) molding a mixture into a predetermined shape, the mixture including ceramic powder having an average particle size of 3.0 to 50 $\mu$m and containing a network-forming oxide, an intermediate oxide, and a network-modifying oxide, together with a binder; (b) firing the molded mixture and obtaining a porous ceramics block having through-holes; (c) treat the surfaces of the through-holes by infiltrating at least one coupling agent selected from a silane coupling agent, a titanate-based coupling agent, and a zirconium-aluminate-based coupling agent into the through-holes of the porous ceramics block under an ultrasonic and/or reduced-pressure condition; and (d) infiltrating a monomer and/or oligomer containing at least one ethylenically double bond into the through-holes of the coupling-treated porous ceramics block under an ultrasonic and/or reduced-pressure condition, and then polymerizing the monomer and/or oligomer. As a specific example, the ceramic powder used herein is an aluminosilicate ceramic powder in which the network-forming oxides are $SiO_2$ and $B_2O_3$, the intermediate oxide is $Al_2O_3$, and the network-modifying oxide is $Na_2O$. By infiltrating resin into the through-holes of the porous ceramics, the filler content of the inorganic material can be increased, wear resistance, mechanical strength such as flexural strength, color stability, stain resistance, and esthetics can be maintained over a long period, and stress within the ceramic is alleviated. Accordingly, it is possible to provide a dental material that exhibits excellent properties in terms of modulus of bending elasticity and impact strength, and the dental material is also described as being suitable for a CAD/CAM system.

Meanwhile, a natural tooth is composed of translucent and light-colored enamel, opaque and darker-colored dentin, and opaque and yellowish basal dentin. Structurally, the crown of a natural tooth exhibits maximum translucency at the incisal region, while the chroma and opacity gradually increase toward the cervical region.

Reflecting these considerations, in recent years, a method of manufacturing an artificial tooth capable of imitating the deep color of a natural tooth using a so-called build-up technique has also been reported.

The build-up method is a method of realizing colors similar to those of a natural tooth layer by layer by forming an artificial tooth with shades by stacking powders such as porcelain or zirconia layer by layer, and then performing heat treatment on the artificial tooth. This method can imitate the color of natural teeth quite closely, but the esthetics of artificial teeth completely depends on the skilled ability of dental technicians, which results in low reproducibility. Accordingly, this method cannot instantaneously manufacture artificial teeth, is not advantageous for patients, and is difficult to achieve through subtractive machining methods such as CAD/CAM.

Meanwhile, when artificial teeth are manufactured using bulk blocks through subtractive machining methods such as CAD/CAM in the related art, since bulk blocks themselves consist of materials exhibiting uniform properties, the resulting artificial teeth could only have a uniform shade, unlike natural teeth. In particular, in the case of artificial teeth manufactured by this method, when they are applied to anterior teeth, they inevitably present an esthetically unnatural appearance, which reduces naturalness.

Even though the method of producing crystallized glass described in Korean Patent No. 10-1975548 by the present applicant allows control of transparency and machinability through a secondary heat treatment process, the resulting crystallized glass is also a single block having uniform properties. Therefore, in order to achieve a deep color similar to that of natural teeth using this glass, it is required to apply a method of combining multiple resulting blocks. In other words, it was not easy to immediately achieve a tooth with a natural color by directly applying a bulk block itself to subtractive machining such as CAD/CAM.

Meanwhile, the present applicant has filed and obtained a patent for a bulk block that is useful for manufacturing artificial tooth prostheses similar to natural teeth, which can not only reduce the time and steps for manufacturing artificial tooth prostheses, but also provide the effect of increased structural stability in terms of force distribution through graded mechanical properties (Korean Patent No. 10-2246195). However, the bulk block in this case is a glass ceramic body and not a composite bulk block, and it was not easy to apply the manufacturing process of the glass ceramic bulk block to a method of simulating natural teeth using a composite bulk block containing polymers.

[Disclosure]

[Technical Problem]

An objective of the present disclosure is to provide a composite bulk block for manufacturing a dental prosthesis that can be processed quickly and easily into an esthetic and functional restoration that simulates a natural tooth.

Another objective of the present disclosure is to provide a method capable of reproducibly manufacturing a composite bulk block that can be processed quickly and easily into an esthetic and functional restoration that simulates a natural tooth.

[Technical Solution]

The present disclosure provides a composite bulk block for manufacturing a dental prosthesis, the composite bulk block including a glass ceramic matrix and a polymer,

wherein the glass ceramic matrix is composed of an amorphous glass matrix and a crystalline phase dispersed in the glass matrix, the crystalline phase includes at least one selected from a leucite crystalline phase and a lithium disilicate crystalline phase as a main crystalline phase,
the polymer is included by 20 to 40 percent by weight with respect to a total weight of the bulk block, and
the bulk block has a gradient in transmittance in a depth direction and has an interface at a point where the gradient value of transmittance changes.

The composite bulk block for manufacturing a dental prosthesis of the present disclosure according to a preferred embodiment may have a multilayer structure in which multiple layers having different average particle sizes of the glass ceramic matrix are stacked.

The composite bulk block for manufacturing a dental prosthesis of the present disclosure according to a preferred embodiment may have a multilayer structure in which multiple layers having different contents of a coloring agent included in the glass ceramic matrix are stacked.

The composite bulk block for manufacturing a dental prosthesis of the present disclosure according to a preferred embodiment may have a multilayer structure in which an average particle size of the glass ceramic matrix increases in one direction, and a content of a coloring agent in the glass ceramic matrix decreases correspondingly in that direction.

The composite bulk block for manufacturing a dental prosthesis of the present disclosure according to a preferred embodiment may have a gradient in biaxial flexural strength, and more preferably, the gradient in biaxial flexural strength may be within a range of 180 to 260 MPa.

In the composite bulk block for manufacturing a dental prosthesis of the present disclosure according to another embodiment, a $\Delta E^*$ may be up to 4 when a specimen is divided on the basis of points where a gradient value of light transmittance changes, and interlayer color differences compared.

In the composite bulk block for manufacturing a dental prosthesis of the present disclosure according to a preferred embodiment, the gradient in light transmittance may be within a range of 30 to 40% at a wavelength of 550nm.

In the composite bulk block for manufacturing a dental prosthesis of the present disclosure according to a preferred embodiment, the polymer may be bonded to the glass ceramic matrix by silane bonding, preferably, the polymer may be a cured product of a curable organic material selected from (meth)acrylate-based monomers and oligomers including an unsaturated double bond, and as a specific example, the curable organic material may be at least one selected from a group composed of hydroxyethyl methacrylate (HEMA), 2,2-bis[4-(2-hydroxy-3-methacryloyloxy propoxy)phenyl]propane (Bis-GMA), triethylene glycol dimethacrylate (TEGDMA), diurethane dimethacrylate (UDMA), urethane dimethacrylate (UDM), biphenyl dimethacrylate (BPDM), n-tolylglycine-glycidyl methacrylate (NTGE), polyethylene glycol dimethacrylate (PEG-DMA), and oligocarbonate dimethacrylic esters.

In the composite bulk block for manufacturing a dental prosthesis of the present disclosure according to a preferred embodiment, the glass matrix may contain $SiO_2$ 69.0~75.0 wt%, $Li_2O$ 12.0~14.0 wt%, $Al_2O_3$ 2.5~3.5 wt%, ZnO 0.12~0.22 wt%, $K_2O$ 1.1~2.7 wt%, $Na_2O$ 0.1~0.3 wt%, $P_2O_5$ 2.0~6.0 wt%, and a coloring agent.

In the composite bulk block for manufacturing a dental prosthesis of the present disclosure according to a specific embodiment, the glass ceramic matrix is obtained by a method comprising: preparing glass powder having a maximum average particle size within 300 $\mu$m by melting a glass composition containing $SiO_2$ 69.0~75.0 wt%, $Li_2O$ 12.0~14.0 wt%, $Al_2O_3$ 2.5~3.5 wt%, ZnO 0.12~0.22 wt%, $K_2O$ 1.1~2.7 wt%, $Na_2O$ 0.1~0.3 wt%, $P_2O_5$ 2.0~6.0 wt%, and a coloring agent, by obtaining a glass molded body of assembly size by water-quenching the molten glass, and by primarily crushing the glass molded body; performing crystallization heat treatment on the glass powder in a furnace from room temperature to a maximum temperature of 755~810°C for 30 minutes to 6 hours; producing glass ceramic powder having a maximum average particle size within 100 $\mu$m by crushing the crystallization heat-treated powder; and molding the glass ceramic powder into a predetermined shape, wherein the glass ceramic matrix may be molded into a multilayer structure by stacking different glass ceramic powders in which at least one factor selected from an average particle size of the glass ceramic powder and an content of the coloring agent in the glass ceramic powder is combined.

An embodiment of the present disclosure provides a method for manufacturing a composite bulk block for manufacturing a prosthesis, the method including: preparing glass powder having a maximum average particle size within 300 $\mu$m by melting a glass composition containing $SiO_2$ 69.0~75.0 wt%, $Li_2O$ 12.0~14.0 wt%, $Al_2O_3$ 2.5~3.5 wt%, ZnO 0.12~0.22 wt%, $K_2O$ 1.1~2.7 wt%, $Na_2O$ 0.1~0.3 wt%, $P_2O_5$ 2.0~6.0 wt%, and a coloring agent, by obtaining a glass molded body of assembly size by water-quenching the molten glass, and by primarily crushing the glass molded body;

performing crystallization heat treatment on the glass powder in a furnace from room temperature to a maximum temperature of 755~810°C for 30 minutes to 6 hours;
producing glass ceramic powder having a maximum average particle size within 100 $\mu$m by crushing the crystallization heat-treated powder; and
molding a glass ceramic matrix by molding the glass ceramic powder into a predetermined shape,
wherein the glass ceramic matrix is molded into a multilayer structure by stacking different glass ceramic powders in which at least one factor selected from an average particle size of the glass ceramic powder and an content of the coloring agent in the glass ceramic powder is combined.

In terms of color reproducibility of the composite bulk block, preferably, for two bulk blocks subjected to the same process, the method may be performed such that a $\Delta E^*$ value is up to 4 when a specimen is divided on the basis of points where a gradient value of transmittance changes, color indices L, a, and b values are measured for each layer, and an interlayer color difference between the two bulk blocks is measured in accordance with the following Equation 1,

[Equation 1]

$$\Delta E^* = \sqrt{\Delta L^{*2} + \Delta a^{*2} + \Delta b^{*2}}$$

$$\Delta L^* = L_1{}^* - L_2{}^*$$
$$\Delta a^* = a_1{}^* - a_2{}^*$$
$$\Delta b^* = b_1{}^* - b_2{}^*$$

where $L_1$, $a_1$, and $b_1$ represent color index values obtained for a first block, and $L_2$, $a_2$, and $b_2$ represent color index values obtained for a second block.

Another embodiment of the present disclosure provides a prosthesis including a glass ceramic matrix and a polymer, wherein the glass ceramic matrix is composed of an amorphous glass matrix and a crystalline phase dispersed in the glass matrix, the crystalline phase includes at least one selected from a leucite crystalline phase and a lithium disilicate crystalline phase as a main crystalline phase, the polymer is included by 20 to 40 percent by weight with respect to a total weight of the bulk block, and the bulk block has a gradient in transmittance in a depth direction and has an interface at a point where the gradient value of transmittance changes.

[Advantageous Effects]

According to the composite bulk block of the present disclosure, it is possible to provide a composite bulk block for manufacturing a dental prosthesis that can be processed quickly and easily into an esthetic and functional restoration that simulates a natural tooth.

[Best mode]

Aspects of the present disclosure that were described above and will be added will be made clearer through exemplary embodiments that are described with reference to the accompanying drawings. Hereinafter, such embodiments of the present disclosure are described in detail so that those skilled in the art can easily understand and achieve the present disclosure.

The present disclosure provides a composite bulk block for manufacturing a dental prosthesis, the composite bulk block including a glass ceramic matrix and a polymer, wherein the glass ceramic matrix is composed of an amorphous glass matrix and a crystalline phase dispersed in the glass matrix, the crystalline phase includes at least one selected from a leucite crystalline phase and a lithium disilicate crystalline phase as a main crystalline phase, the polymer is included by 20 to 40 percent by weight with respect to the total weight of the bulk block, and the bulk block has a gradient in transmittance in the depth direction and has an interface at a point where the gradient value of transmittance changes.

In the above and following descriptions, the term "main crystalline phase" is defined as a crystalline phase accounting for at least 50 percent by weight of the total crystalline phases, and the term "additional crystalline phase" may be defined as the remaining crystalline phase(s) other than the main crystalline phase of the total crystalline phases.

The content of the crystalline phase can be determined by X-ray diffraction analysis. For example, in a specimen composed of two crystalline phases, a and b, the proportion $F_a$ of the crystalline phase a can be quantitatively represented by the following Mathematical expression 1.

[Mathematical expression 1]

$$F_a = \frac{1}{1 + K\left(\dfrac{I_b}{I_a}\right)}$$

This value can be obtained by measuring the intensity ratio of the two crystalline phases and determining the integer K. K is the absolute intensity ratio $I_{oa}/I_{ob}$ of the two pure crystalline phases, and is determined by measuring a standard material.

In the above and following descriptions, the term "main crystalline phase" may be defined as that determined on the basis of the content calculated by such a method.

In the above and following descriptions, the bulk block is not limited in shape, and may include, for example, bulk bodies of various forms such as a block form, a disk form, an ingot form, and a cylinder form.

The composite bulk block according to the present disclosure includes a glass ceramic as a ceramic in consideration of the refractive index difference between the monomer material forming the polymer and the ceramic. In particular, a lithium disilicate-based glass ceramic or a leucite-based glass ceramic may be preferable in terms of esthetics, and a lithium disilicate-based glass-ceramic may be most preferable.

Meanwhile, it may be preferable that the polymer present in the composite bulk block is included by 20 to 40 percent by weight with respect to the total weight of the bulk block. When the polymer is included by less than 20 percent by weight with respect to the total weight of the bulk block, low machinability may occur due to the brittleness of the ceramic, which may be disadvantageous for use. When the polymer is included by exceeding 40 percent by weight, problems such as fracture or wear may occur due to excessively low properties.

The composite bulk block according to the present disclosure has a structure in which a gradient in light transmittance exists in the depth direction, and an interface is present at a point where the gradient value of light transmittance changes. Here, "having a gradient in light transmittance" means that, when a light transmittance graph is plotted along the depth, the light transmittance graph changes with a slope. The "point where the gradient value of light transmittance changes" is understood as a point where the slope value of light transmittance changes. Further, "an interface is present" is understood to mean that, within the composite bulk block, an interface interpretable as a layer exists at such a point where the slope value of light transmittance changes. That is, it will be understood that the composite bulk block has a multilayer structure.

A composite bulk block satisfying such a structure can exhibit, in terms of esthetics and property, a similar aspect to natural teeth, which are composed of transparent and bright enamel, opaque and darker dentin, and opaque and more yellowish cementum.

[Mode for Invention]

Such a composite bulk block for manufacturing a dental prosthesis may be achieved from a multilayer structure in which multiple layers having different average particle sizes of a glass ceramic matrix are stacked, or from a multilayer structure formed by stacking multiple layers having different contents of colorants included in a glass ceramic matrix, or from a combination thereof.

As an example, the results of examining the effect of the average particle size of a glass ceramic matrix on transmittance in a composite bulk block are shown in Table 1. Here, the particles refer to the particle size of a glass ceramic powder that forms a glass ceramic matrix, and for each particle size, a composite bulk block was manufactured at the same heat treatment temperature.

[Table 1]

| Specimen | Average particle size ($\mu$m) | Transmittance (%) |
|---|---|---|
| 1 | 30 | 44.847 |
| 2 | 15 | 42.124 |
| 3 | 6 | 40.756 |
| 4 | 4 | 41.332 |

It was seen from the description of Table 1 that the transmittance of the composite bulk block can be controlled according to the particle size forming a glass ceramic matrix in the composite bulk block. That is, it could be seen that the smaller the particle size forming the glass ceramic matrix, the lower the transmittance of the composite bulk block under the same condition.

Further, it could be seen that the particle size forming the glass ceramic matrix in the composite bulk block also affects properties such as flexural strength and surface hardness.

[Table 2]

| Specimen | Average particle size ($\mu$m) | Biaxial flexural strength (MPa) | Surface hardness (MPa) |
|---|---|---|---|
| 1 | 30 | 130 | 550 |
| 2 | 15 | 170 | 600 |
| 3 | 6 | 210 | 680 |
| 4 | 4 | 215 | 685 |

Meanwhile, it could be seen that the transmittance varies depending on the content of the coloring agent included in the glass ceramic matrix of the composite bulk block. The specimens herein were manufactured as composite bulk blocks under the same sintering condition, with the same average particle size and heat treatment condition of the glass ceramic matrix, but differing only in the content of the coloring agent.

[Table 3]

| Specime n | Average particle size ($\mu$m) | Coloring agent (percent by weight) | Transmitta nce (%) |
|---|---|---|---|
| 1 | 4 | 0.3367 | 36.047 |
| 2 | 4 | 0.3940 | 32.342 |
| 3 | 4 | 0.4220 | 29.289 |
| 4 | 4 | 1.0185 | 26.175 |

As described in Table 3, it could be seen that the transmittance decreases as the content of the coloring agent increases.

In general glass ceramics can include various coloring agents in the glass composition, and these coloring agents can, of course, include various metal oxides that may generally be interpreted as colorants or fluorescent agents.

From the results shown in Tables 1 to 3, it could be seen that the incisal region, which has excellent esthetics and relatively low properties, is composed of a glass ceramic matrix with a low content of coloring agent and a large average particle size, the cervical region is composed of a glass ceramic matrix with a high content of coloring agent and a relatively small average particle size, and the middle region, which is an intermediate region, is composed of a glass ceramic matrix in which the particle sizes applied in the incisal and cervical regions are appropriately mixed, whereby it is possible to provide a composite bulk block for manufacturing a dental prosthesis that has a gradient in light transmittance in the depth direction and has an interfaces at a point where the gradient value of light transmittance changes. That is, the composite bulk block for manufacturing a dental prosthesis of the present disclosure according to a preferred embodiment has a multilayer structure in which the average particle size of a glass ceramic matrix increases in one direction, and the content of a coloring agent of the glass ceramic matrix decreases in that direction, which may be preferable for simulating natural teeth.

The composite bulk block according to an embodiment of the present disclosure has a gradient in biaxial flexural strength, and the gradient may be within the range of 180 to 260 MPa.

It can be seen that the composite bulk block for manufacturing a dental prosthesis according to a preferred embodiment of the present disclosure may have a gradient in light transmittance in the range of 30 to 40% at a wavelength of 550 nm, and, in a specific experimental example, it could be seen that, as shown in the following Table 4, the light transmittance varies in the depth direction.

[Table 4]

| | Light transmittance of layer of composite bulk block of the present disclosure (%, at a wavelength of 550 nm) |
| --- | --- |
| First layer | 37.41 |
| Second layer | 32.91 |
| Third layer | 32.05 |

Since, in general, the enamel layer of a natural tooth exhibits light transmittance of 35% or more, and the dentine layer exhibits light transmittance of about 25%, it could be seen that the composite bulk block according to the present disclosure sufficiently simulates a natural tooth in terms of esthetics.

Meanwhile, in the dental bulk block of the present disclosure, a polymer may be bonded to a glass ceramic matrix by silane bonding.

Such silane bonding can be made possible through surface treatment of the glass ceramic matrix, and specifically, it can be made possible by treating the surface of the glass ceramic with an organofunctional silane compound having an ethylenically unsaturated double bond and then bonding a polymer thereto.

More specifically, the organofunctional silane may be at least one selected from a group consisting of methacryloxyalkylene trialkoxysilane, 3-methacryloxypropyl trimethoxysilane, and 3-methacryloxypropyl triethoxysilane, but is not limited thereto.

As an example of such a treatment method, the method described in Korean Patent No. 10-1609291, the method described in Korean Patent No. 10-1682542, the method described in Korean Patent No. 10-2122202, or the method described in Korean Patent No. 10-2228118 may be used.

The polymer contained in the composite bulk block according to the present disclosure may be a cured product of a curable organic material selected from (meth) acrylate-based monomers and oligomers including an unsaturated double bond. As a specific example, the curable organic material may be at least one selected from the group consisting of hydroxyethyl methacrylate (HEMA), 2,2-bis[4-(2-hydroxy-3-methacryloyloxy propoxy)phenyl]propane (Bis-GMA), triethylene glycol dimethacrylate (TEGDMA), diurethane dimethacrylate (UDMA), urethane dimethacrylate (UDM), biphenyl dimethacrylate (BPDM), n-tolylglycine-glycidyl methacrylate (NTGE), polyethylene glycol dimethacrylate (PEG-DMA), and oligocarbonate dimethacrylic esters.

Among such monomers and/or oligomers, for example, in the case of UDMA or Bis-GMA, due to their high viscosity, they can be mixed with TEGDMA having low viscosity in a mass ratio of 5:5 to 6:4, but the present disclosure is not limited thereto.

Curable organic materials exhibit shrinkage curing during polymerization, and an effect of minimizing changes in properties caused by shrinkage curing can also be obtained by organofunctional silane described above.

Surface treatment of crystallized glass using such an organofunctional silane can, of course, be performed using a solution in which organofunctional silane is diluted in ethanol, in consideration of the particularity of dental composites.

When a composite bulk block is manufactured by treating the surface of a glass ceramic with an organofunctional silane in this manner and bonding it with a polymer, it serves to increase the volume % of an inorganic material in the composite overall, whereby it is possible to enhance the biaxial flexural strength and hardness.

Meanwhile, an initiator may be included to cure a curable organic material by performing crosslinking in the form of a polymer, and a photoinitiator and a thermal initiator may be exemplified as the initiator. In the present disclosure, a preferred initiator is a thermal initiator, and a composite having superior properties can be obtained when heat-polymerization is performed including a thermal initiator, compared to when light-polymerization is performed including a photoinitiator.

Various compounds known in the art can be used as a thermal initiator, and, known peroxides such as dibenzoyl peroxide, dilauroyl peroxide, tert-butyl peroxy-2-ethylhexanoate, or tert-butyl perbenzoate may be exemplified, but the present disclosure is not limited thereto.

In order to obtain the dental composite bulk block according to the present disclosure described above, preferably, a glass matrix may contain $SiO_2$ 69.0~75.0 wt%, $Li_2O$ 12.0~14.0 wt%, $Al_2O_3$ 2.5~3.5 wt%, ZnO 0.12~0.22 wt%, $K_2O$ 1.1~2.7 wt%, $Na_2O$ 0.1~0.3 wt%, $P_2O_5$ 2.0~6.0 wt%, and a coloring agent.

This glass composition undergoes nucleation and crystal growth heat treatment for crystallization, thereby precipitating crystal phases within an amorphous glass matrix, and the glass matrix undergoes nucleation and crystal growth at a temperature ranging from 500°C to 880°C. That is, nucleation starts at a minimum temperature of 500°C, and crystal growth occurs during heating, and this crystal growth shows the lowest light transmittance in use for a dental prosthesis at a maximum temperature of 880°C. That is, the light transmittance gradually decreases from the temperature at which crystals start to grow up to a maximum temperature of 880°C. Considering this crystal growth, crystals can be grown to an extent that satisfies high strength while ensuring machinability, which can be useful for the glass ceramic matrix of the composite bulk block according to the present disclosure.

From this perspective, the glass ceramic constituting the dental composite block according to the present closure may be obtained through: a step of preparing glass powder having a maximum average particle size within 300 $\mu$m by melting a glass composition containing $SiO_2$ 69.0~75.0 wt%, $Li_2O$ 12. 0~14.0 wt%, $Al_2O_3$ 2.5~3.5 wt%, ZnO 0.12~0.22 wt%, $K_2O$ 1.1~2.7 wt%, $Na_2O$ 0.1~0.3 wt% and $P_2O_5$ 2.0~6.0 wt%, by obtaining a glass molded body of assembly size by water-quenching the molten glass, and by primarily crushing the glass molded body; a step of performing crystallization heat treatment on the glass powder in a furnace from room temperature to a maximum temperature of 755~810°C for 30 minutes to 6 hours; a step of producing glass ceramic powder having a maximum average particle size within 100 $\mu$m by crushing the crystallization heat-treated powder; and a step of molding the glass ceramic powder into a predetermined shape.

In a specific embodiment for obtaining the glass ceramic constituting the composite blank of the present disclosure, first, a glass composition containing $SiO_2$ 69.0~75.0 wt%, $Li_2O$ 12.0~14.0 wt%, $Al_2O_3$ 2.5~3.5 wt%, ZnO 0.12~0.22 wt%, $K_2O$ 1.1~2.7 wt%, $Na_2O$ 0.1~0.3 wt% and $P_2O_5$ 2.0~6.0 wt% is weighed and mixed.

For the glass composition, $Li_2CO_3$ may be added instead of $Li_2O$, and the carbon (C) component of $Li_2CO_3$. i.e., carbon dioxide ($CO_2$), is released as a gas and escapes during the glass melting process. Further, in the case of alkali oxides, $K_2CO_3$ and $Na_2CO_3$ may be added instead of $K_2O$ and $Na_2O$, respectively, and the carbon (C) components of $K_2CO_3$ and $Na_2CO_3$, i.e., carbon dioxide ($CO_2$), are released as a gas and escape during the glass melting process.

A dry mixing process is used for mixing, and a ball milling process, etc. may be used as the dry mixing process. In detail, in the ball milling process, a starting material is loaded into a ball milling machine, and the ball milling machine is rotated at a predetermined speed, thereby mechanically crushing and uniformly mixing the starting material. Balls made of a ceramic material such as zirconia or alumina may be used as the balls used in the ball milling machine, and the balls may all have the same size or at least two different sizes. The size of the balls, milling time, and the rotational speed per minute of the ball milling machine are adjusted in consideration of the target particle size. For example, considering the particle size, the size of the balls may be set in the range of about 1 mm to 30 mm, and the rotational speed of the ball milling machine may be set in the range of about 50 to 500 rpm. Ball milling is preferably performed for 1 to 48 hours in consideration of the target particle size, etc. The starting material is crushed into fine particles by ball milling, and is uniformly mixed while having a uniform particle size.

The mixed starting material is loaded into a melting furnace, and the furnace containing the starting material is heated, whereby the starting material is melted. Here, melting refers to the change of the starting material from a solid state to a material state having the viscosity of a liquid state. The melting furnace is preferably made of a material having a high melting point, high strength, and a low contact angle to suppress adhesion of a molten material, and for this purpose, it is preferable that the melting furnace is made of materials such as platinum (Pt), diamond-like carbon (DLC), or chamotte, or that the surface of the melting furnace is coated with materials such as platinum (Pt) or diamond-like carbon (DLC).

Melting is preferably performed at atmospheric pressure at a temperature of 1,400 to 2,000°C for 1 to 12 hours. If the melting temperature is less than 1,400°C, the starting material may not be completely melted, and if the melting temperature exceeds 2,000°C, excessive energy consumption is required, so it is uneconomical. Therefore, it is preferable to perform melting at a temperature within the above range. Further, if the melting time is too short, the starting material may not be sufficiently melted, and if the melting time is too long, excessive energy consumption is required, so it is uneconomical. The heating rate of the melting furnace is preferably in the range of about 5°C/min to 50°C/min. If the heating rate of the melting furnace is too slow, it takes a long time, which results in low productivity, and if the heating rate of the melting furnace is too fast, the rapid temperature increase may cause a large amount of volatilization of the starting material, which may deteriorate the properties of the crystallized glass. Therefore, it is preferable to raise the temperature of the melting furnace at the heating rate in the range described above. Melting is preferably performed in an oxidizing atmosphere such as oxygen ($O_2$) or air.

In order to crush the molten glass into a desired shape and size, a glass molded body of assembly size is obtained by water-quenching the molten glass, and the glass molded body is primarily crushed, thereby preparing glass powder having a maximum average particle size of 300 $\mu$m or less.

The glass powder obtained in this manner is transferred to a crystallization heat-treatment firing furnace, and the intended crystallization heat-treated powder is produced.

In this case, the crystallization heat treatment is performed from room temperature to a maximum temperature of 755 to 810°C for 30 minutes to 6 hours in the furnace, whereby crystallization heat-treated powder having only pure lithium disilicate as a crystalline phase with a crystal size of 0.01 to 1.0 $\mu$m can be obtained.

Next, glass ceramic powder having a maximum average particle size of 100$\mu$m or less is produced by crushing the crystallization heat-treated powder.

Finally, a glass ceramic matrix can be obtained through a step of molding the glass ceramic powder into a predetermined shape.

When the glass ceramic matrix is molded into a multilayer structure by stacking different glass ceramic powders in which at least one factor selected from the average particle size of the glass ceramic powder and the content of the coloring agent in the glass ceramic powder is combined, it is possible to manufacture a multilayer molded product of the glass ceramic matrix that exhibits different transmittances and mechanical properties and esthetically and physically simulates a natural tooth.

By using the molded product obtained as described above as a glass ceramic matrix, and by utilizing the method described in Korean Patent No. 10-1609291, the method described in Korean Patent No. 10-1682542, the method described in Korean Patent No. 10-2122202, or the method described in Korean Patent No. 10-2228118, it is possible to manufacture a dental bulk block that includes the glass ceramic matrix and the polymer according to the present disclosure and in which the glass ceramic matrix is composed of an amorphous glass matrix and a crystalline phase dispersed in the glass matrix, the crystalline phase includes at least one selected from a leucite crystalline phase and a lithium disilicate crystalline phase as a main crystalline phase, the polymer is included by 20 to 40 percent by weight with respect to the total weight of the bulk block, and the bulk block has a gradient in transmittance in the depth direction and has an interface at a point where the gradient value of transmittance changes.

As a process indicator, for two bulk blocks subjected to the same process, it may be preferable to divide a specimen on the basis of the points where the gradient value of transmittance changes, measure L, a, and b values that are color indices for each layer, and calculate the interlayer color difference between the two bulk blocks in accordance with the following Equation 1 such that the $\triangle E^*$ value is up to 4.

[Equation 1]

$$\Delta E^* = \sqrt{\Delta L^{*2} + \Delta a^{*2} + \Delta b^{*2}}$$

$$\Delta L^* = L_1^* - L_2^*$$
$$\Delta a^* = a_1^* - a_2^*$$
$$\Delta b^* = b_1^* - b_2^*$$

In the above equation, $L_1$, $a_1$, and $b_1$ represent the color index values obtained for the first block, and $L_2$, $a_2$, and $b_2$ represent the color index values obtained for the second block.

In general, the $\triangle E^*$ value is 0, it means that there is no color difference and it means that color reproducibility is excellent when two specimens belong to the same lot, and when the $\triangle E^*$ value is a value between 0 and 2, it means that there is a very slight color difference, and the $\triangle E^*$ value is a value between 2 and 4, it means that there is a noticeable color difference. When the $\triangle E^*$ value is a value between 4 and 6, a color difference is easily appreciable, and it means the limit for clinical use (poor aesthetics) when the two products belong to the same lot, and when a product with a △E* value above 6, it may mean that the product is not suitable for clinical use due to an excessively large color difference. It was confirmed that the method for manufacturing a composite bulk block according to the present disclosure can has a △E* value of up to 4 and can achieve a process with excellent color reproducibility.

In the above description, "two bulk blocks subjected to the same process" should be understood as the fact that the two blocks are based on not only process uniformity, but also the raw material uniformity between them.

The obtained composite bulk block can be manufactured into a prosthesis with a desired shape through machining by CAD-CAM, as described above.

The machined prosthesis includes a the glass ceramic matrix and a polymer, in which the glass ceramic matrix is composed of an amorphous glass matrix and a crystalline phase dispersed in the glass matrix, the crystalline phase includes at least one selected from a leucite crystalline phase and a lithium disilicate crystalline phase as a main crystalline phase, the polymer is included by 20 to 40 percent by weight with respect to the total weight of the bulk block, and the bulk block has a gradient in transmittance in the depth direction and has an interface at a point where the gradient value of transmittance changes. Accordingly, it is possible to provide a prosthesis that simulates a natural tooth.

Although the present disclosure has been described with reference to embodiments, those are only examples and may be changed and modified into other equivalent embodiments from the present disclosure by those skilled in the art.

[Industrial Applicability]

The present disclosure provides a composite bulk block for manufacturing a dental prosthesis, which is a composite bulk block for a dental prosthesis that can be processed quickly and easily into an esthetic and functional restoration that simulates a natural tooth, and the composite bulk block is useful for manufacturing of prostheses for artificial teeth.

**Claims**

1. A composite bulk block for manufacturing a dental prosthesis, the composite bulk block comprising a glass ceramic matrix and a polymer,

   wherein the glass ceramic matrix is composed of an amorphous glass matrix and a crystalline phase dispersed in the glass matrix, the crystalline phase includes at least one selected from a leucite crystalline phase and a lithium disilicate crystalline phase as a main crystalline phase,
   the polymer is included by 20 to 40 percent by weight with respect to a total weight of the bulk block, and
   the bulk block has a gradient in transmittance in a depth direction and has an interface at a point where the gradient value of transmittance changes.

2. The composite bulk block of claim 1, wherein the composite bulk block has a multilayer structure in which multiple layers having different average particle sizes of the glass ceramic matrix are stacked.

3. The composite bulk block of claim 1, wherein the composite bulk block has a multilayer structure in which multiple layers having different contents of a coloring agent included in the glass ceramic matrix are stacked.

4. The composite bulk block of claim 1, wherein the composite bulk block has a multilayer structure in which an average particle size of the glass ceramic matrix increases in one direction, and a content of a coloring agent in the glass ceramic matrix decreases correspondingly in that direction.

5. The composite bulk block of claim 1, wherein the composite bulk block has a gradient in biaxial flexural strength.

6. The composite bulk block of claim 1, wherein a gradient in biaxial flexural strength is within a range of 180 to 260 MPa.

7. The composite bulk block of claim 1, wherein a gradient in light transmittance is within a range of 30 to 40% at a wavelength of 550nm.

8. The composite bulk block of claim 1, wherein the polymer is bonded to the glass ceramic matrix by silane bonding.

9. The composite bulk block of claim 1, wherein the polymer is a cured product of a curable organic material selected from (meth)acrylate-based monomers and oligomers including an unsaturated double bond.

10. The composite bulk block of claim 9, wherein the curable organic material is at least one selected from a group composed of hydroxyethyl methacrylate (HEMA), 2,2-bis[4-(2-hydroxy-3-methacryloyloxy propoxy)phenyl]propane (Bis-GMA), triethylene glycol dimethacrylate (TEGDMA), diurethane dimethacrylate (UDMA), urethane dimethacrylate (UDM), biphenyl dimethacrylate (BPDM), n-tolylglycine-glycidyl methacrylate (NTGE), polyethylene glycol dimethacrylate (PEG-DMA), and oligocarbonate dimethacrylic esters.

11. The composite bulk block of claim 1, wherein the glass matrix contains $SiO_2$ 69.0~75.0 wt%, $Li_2O$ 12.0~14.0 wt%, $Al_2O_3$ 2.5~3.5 wt%, ZnO 0.12~0.22 wt%, $K_2O$ 1.1~2.7 wt%, $Na_2O$ 0.1~0.3 wt%, $P_2O_5$ 2.0~6.0 wt%, and a coloring agent.

12. The composite bulk block of claim 1, wherein the glass ceramic matrix is obtained by a method comprising: preparing glass powder having a maximum average particle size within 300 $\mu$m by melting a glass composition containing $SiO_2$ 69.0~75.0 wt%, $Li_2O$ 12.0~14.0 wt%, $Al_2O_3$ 2.5~3.5 wt%, ZnO 0.12~0.22 wt%, $K_2O$ 1.1~2.7 wt%, $Na_2O$ 0.1~0.3 wt%, $P_2O_5$ 2.0~6.0 wt%, and a coloring agent, by obtaining a glass molded body of assembly size by water-quenching the molten glass, and by primarily crushing the glass molded body; performing crystallization heat treatment on the glass powder in a furnace from room temperature to a maximum temperature of 755~810°C for 30 minutes to 6 hours; producing glass ceramic powder having a maximum average particle size within 100 $\mu$m by crushing the crystallization heat-treated powder; and molding the glass ceramic powder into a predetermined shape, wherein the glass ceramic matrix is molded into a multilayer structure by stacking different glass ceramic powders in which at least one factor selected from an average particle size of the glass ceramic powder and an content of the coloring agent in the glass ceramic powder is combined.

13. A method for manufacturing a composite bulk block for manufacturing a prosthesis, the method comprising:

preparing glass powder having a maximum average particle size within 300 $\mu$m by melting a glass composition containing $SiO_2$ 69.0~75.0 wt%, $Li_2O$ 12.0~14.0 wt%, $Al_2O_3$ 2.5~3.5 wt%, ZnO 0.12~0.22 wt%, $K_2O$ 1.1~2.7 wt%, $Na_2O$ 0.1~0.3 wt%, $P_2O_5$ 2.0~6.0 wt%, and a coloring agent, by obtaining a glass molded body of assembly size by water-quenching the molten glass, and by primarily crushing the glass molded body;
performing crystallization heat treatment on the glass powder in a furnace from room temperature to a maximum temperature of 755~810°C for 30 minutes to 6 hours;
producing glass ceramic powder having a maximum average particle size within 100 $\mu$m by crushing the crystallization heat-treated powder; and
molding a glass ceramic matrix by molding the glass ceramic powder into a predetermined shape, wherein the glass ceramic matrix is molded into a multilayer structure by stacking different glass ceramic powders in which at least one factor selected from an average particle size of the glass ceramic powder and an content of the coloring agent in the glass ceramic powder is combined.

14. The method of claim 13, wherein, for two bulk blocks subjected to the same process, the method is performed such that a $\triangle E^*$ value is up to 4 when a specimen is divided on the basis of points where a gradient value of transmittance changes, color indices L, a, and b values are measured for each layer, and an interlayer color difference between the two bulk blocks is measured in accordance with the following Equation 1,

[Equation 1]

$$\varDelta E^* = \sqrt{\varDelta L^{*2} + \varDelta a^{*2} + \varDelta b^{*2}}$$

$$\varDelta L^* = L_1^* - L_2^*$$
$$\varDelta a^* = a_1^* - a_2^*$$
$$\varDelta b^* = b_1^* - b_2^*$$

where $L_1$, $a_1$, and $b_1$ represent color index values obtained for a first block, and $L_2$, $a_2$, and $b_2$ represent color index values obtained for a second block.

15. The method of claim 13, wherein the method is performed to mold the glass ceramic matrix into a multilayer structure by stacking multiple layers having different average particle sizes of the glass ceramic matrix.

16. The method of claim 13, wherein the method is performed to mold the glass ceramic matrix into a multilayer structure by stacking multiple layers having different contents of a coloring agent included in the glass ceramic matrix.

17. The method of claim 13, wherein the method is performed to mold the glass ceramic matrix into a multilayer structure in which an average particle size of the glass ceramic matrix increases in one direction, and the content of the coloring agent in the glass ceramic matrix decreases correspondingly in that direction.

18. A prosthesis processed from the composite bulk block of claim 1, the prosthesis comprising a glass ceramic matrix and a polymer,

wherein the glass ceramic matrix is composed of an amorphous glass matrix and a crystalline phase dispersed in the glass matrix, the crystalline phase includes at least one selected from a leucite crystalline phase and a lithium disilicate crystalline phase as a primary crystalline phase,
the polymer is included by 20 to 40 percent by weight with respect to a total weight of the bulk block, and
the prosthesis has a gradient in transmittance in a depth direction and has an interface at a point where the gradient value of transmittance changes.

## INTERNATIONAL SEARCH REPORT

| | International application No. |
|---|---|
| | **PCT/KR2024/006835** |

### A. CLASSIFICATION OF SUBJECT MATTER

**A61C 13/00**(2006.01)i; **A61C 13/083**(2006.01)i; **A61C 13/087**(2006.01)i; **A61C 13/09**(2006.01)i

According to International Patent Classification (IPC) or to both national classification and IPC

### B. FIELDS SEARCHED

Minimum documentation searched (classification system followed by classification symbols)

A61C 13/00(2006.01); A61K 6/00(2006.01); A61K 6/802(2020.01); A61K 6/831(2020.01); A61K 6/884(2020.01); B33Y 40/20(2020.01); B33Y 70/10(2020.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 치아(teeth), 보철(implant), 유리(glass), 고분자(polymer), 광투과율(light transmittance), 적층(layer), 입자크기(particle size), 조색제(colorant), 경사(incline)

### C. DOCUMENTS CONSIDERED TO BE RELEVANT

| Category* | Citation of document, with indication, where appropriate, of the relevant passages | Relevant to claim No. |
|---|---|---|
| A | KR 10-2023-0000982 A (HASS CORPORATION) 03 January 2023 (2023-01-03)<br>See claims 1 and 9. | 1-18 |
| A | KR 10-2519286 B1 (HASS CORPORATION) 10 April 2023 (2023-04-10)<br>See claims 1 and 3. | 1-18 |
| A | KR 10-2021-0120244 A (HASS CORPORATION) 07 October 2021 (2021-10-07)<br>See claims 1 and 4. | 1-18 |
| A | KR 10-2020-0098346 A (HASS CORPORATION) 20 August 2020 (2020-08-20)<br>See abstract; and claims 1 and 3. | 1-18 |
| A | MAIA, R. R. et al. Comparison of light-transmittance in dental tissues and dental composite restorations using incremental layering build-up with varying enamel resin layer thickness. Restorative dentistry & endodontics. 2018, vol. 43, no. 2, thesis no. e22, pp. 1-9.<br>See abstract. | 1-18 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **20 September 2024** | **20 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2024/006835** |

| Patent document cited in search report | | | Publication date (day/month/year) | Patent family member(s) | | | Publication date (day/month/year) |
| --- | --- | --- | --- | --- | --- | --- | --- |
| KR | 10-2023-0000982 | A | 03 January 2023 | CN | 117693320 | A | 12 March 2024 |
| | | | | EP | 4360588 | A1 | 01 May 2024 |
| | | | | JP | 2023-535253 | A | 17 August 2023 |
| | | | | JP | 7517739 | B2 | 17 July 2024 |
| | | | | KR | 10-2023-0151120 | A | 01 November 2023 |
| | | | | US | 2024-0130934 | A1 | 25 April 2024 |
| | | | | WO | 2022-270973 | A1 | 29 December 2022 |
| KR | 10-2519286 | B1 | 10 April 2023 | CN | 117750921 | A | 22 March 2024 |
| | | | | EP | 4124606 | A1 | 01 February 2023 |
| | | | | JP | 2024-527957 | A | 26 July 2024 |
| | | | | US | 2023-0032952 | A1 | 02 February 2023 |
| | | | | WO | 2023-008650 | A1 | 02 February 2023 |
| KR | 10-2021-0120244 | A | 07 October 2021 | CN | 115605160 | A | 13 January 2023 |
| | | | | EP | 4129232 | A1 | 08 February 2023 |
| | | | | JP | 2023-519211 | A | 10 May 2023 |
| | | | | US | 2023-0021279 | A1 | 19 January 2023 |
| | | | | WO | 2021-194327 | A1 | 30 September 2021 |
| KR | 10-2020-0098346 | A | 20 August 2020 | CN | 111770747 | A | 13 October 2020 |
| | | | | EP | 3714862 | A1 | 30 September 2020 |
| | | | | JP | 2020-132632 | A | 31 August 2020 |
| | | | | JP | 7009526 | B2 | 25 January 2022 |
| | | | | US | 11591427 | B2 | 28 February 2023 |
| | | | | US | 2021-0214483 | A1 | 15 July 2021 |
| | | | | WO | 2020-166869 | A1 | 20 August 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101682542
- KR 101609291
- KR 102122202
- KR 102228118
- US 7807227 B
- JP 4636514 B
- KR 101975548
- KR 102246195